# EUROPEAN PATENT APPLICATION

(11) **EP 3 530 136 A1**
(43) Date of publication of application: **28.08.2019**
(21) Application number: 19159515.6
(22) Date of filing: 26.02.2019
(51) Int. Cl.: A43B 13/41, A43B 23/22, A43D 31/02, B29D 35/00, B29D 35/12

(54) **MOLD FOR MOLDING A SHANK FOR SHOE INSOLES AND METHOD FOR MOLDING A SHANK BY MEANS OF SAID MOLD**

(30) Priority: 27.02.2018 IT 201800003109
(71) Applicant: Calzaturificio Peron S.R.L., 30010 Componogara (VE) (IT)
(72) Inventor: Masenadore, Alberto, 30010 Camponogara (VE) (IT)
(74) Representative: Gallo, Luca

(57) **Abstract**

Mold (1) for molding a shank (100) for shoe insoles, comprising a first matrix (2) provided with at least one female seat (3) intended to receive a shank (100) to be formed, and a second matrix (4) provided with at least one male body (5) counter-shaped with respect to said female seat (3) and intended to be inserted in the latter with the shank (100) to be formed interposed therebetween.

At least one from among the first matrix (2) and the second matrix (4) is movable, by actuator means of a press, away from and closer to the other matrix in order to mold the shank (100).

In addition, each first matrix (2) and second matrix (4) is composed of a plurality of side-by-side plates (6) that are parallel to each other and mechanically joined by first fixing means (7).

The mold (1) comprises at least one first cavity (8) made in said first matrix (2) and at least one second cavity (9) made in said second matrix (4) in order to house means for heating said mold (1).

## Description

### Field of application

The present invention regards a mold for molding a shank for shoe insoles and a method for molding a shank by means of said mold according to the preamble of the respective independent claims.

The present method, and the mold employed in such method, are intended to be employed in the shoe manufacturing field for the production of shanks to be inserted in shoe insoles, i.e. for the production of reinforcement elements to be inserted within the insoles in order to sustain the weight of a user who wears the shoe.

Advantageously, the mold and the method, object of the present invention, are employable in the production of shanks to be inserted in the insoles of woman's shoes, in which the portion between the toe and the heel remains raised from the ground and thus requires a reinforcement in order to sustain the weight of the user.

The invention is therefore inserted in the context of the shoe manufacturing field and in particular in the field of production of woman's shoes.

### State of the art

The production of a shoe generally occurs through methods which derive from historic traditions and which require the presence of an artisan to manually perform several production steps.

Generally, the method for producing a shoe initially provides for a step of arranging a model, in the jargon of the field known as "form", which substantially reproduces the foot of a user and around which the shoe will then be constructed.

Of course, for each shoe model, a right form and a left form is provided. In addition, for each model, multiple right forms and multiple left forms are provided of different sizes, in order to make different shoe sizes.

In particular, the form acts as a guide during the entire shoe production and defines the shape of the internal volume of the shoe itself. Indeed, from the form, all of the shapes and dimensions of the various elements constituting the shoe are obtained. For example, from the form, the length and the width of the shoe are obtained together with the shape of the sole and the curvature of the waist (portion of the shoe between the toe and the heel, placed at the arch of the foot).

Starting from the form, therefore, one proceeds to delineate the shape of the insole, i.e. the lower part of the shoe against which the sole of the foot of the user is abutted, and the curvature required by the insole is obtained.

The insoles of known type are generally formed by multiple layers of cardboard or leather, joined together (generally by means of glue) and pressed in order to obtain the desired form.

In order to better sustain the weight of the user, especially in shoes provided with a considerable curvature of the waist, it is known to insert a reinforcement layer between the layers of the insole that is generally made of metal, known in the jargon of the field with the term "shank".

Once the insole is obtained, this is fixed on the lower part to the form and one proceeds with the application of the upper, i.e. of the fabric or leather layers that enclose the foot of the user.

The upper is applied by enclosing the upper part of the form with the various fabric or leather layers and fixing the latter to the lower surface of the insole.

In a per se known manner, the upper is fixed to the insole starting from the toe of the shoe, then proceeding along the sides and finally fixing the rear counter.

In order for it to be fixed to the insole, the upper is provided with at least one hem, which is folded below the insole and fixed to the lower surface of the latter at its external perimeter, preferably with nails or glue.

After having fixed the upper, one proceeds to apply the sole of the shoe, i.e. the part of the shoe that is in contact with the ground. In particular, the sole is generally fixed to the lower surface of the insole, to cover the hem of the upper, preferably by means of a glue layer.

At this point, a step is provided for the oven-baking of the shoe in order to dry the various glue layers used and for drying the leather of the upper, so as to make it perfectly adhere to the form.

Upon completing the baking step, one extracts the form from the shoe and one proceeds with finishing the obtained shoe, and possibly with the application of various accessories, such as laces, buckles, rubber shoe heel protectors, etc.

In the above-described methods for producing shoes of known type, the steps of fixing the upper and the sole to the insole are generally performed by hand by an artisan, who fixes together the various elements so as to avoid forming bends or creases that would be uncomfortable for the user who wears the shoe and which are not aesthetically appealing.

Otherwise, the production of the various elements is nearly entirely automated so to be able to accelerate the production and obtain products that are fully equivalent to each other.

More in detail, elements made of plastic material like the form and the heel are generally produced via molding starting from a computerized model of the shoe to be obtained. Also the insole, the sole and the upper are normally cut by automated machinery starting from the same computerized model, in order to be complementary to the form on which the shoe will be constructed.

Moreover, the insole, as stated above, after having been cut must also be shaped so as to perfectly adhere to the lower part of the form.

Conventionally, the method for producing an insole provides for cutting, from a cardboard or leather sheet, multiple shapes with the desired form (usually two for each shoe), which are fixed to each other with glue and between which a shank made of hardened (and hence non-deformable) steel is inserted in order to define the curvature of the insole and prevent the completed shoe from being crushed under the weight of the user who wears it.

The insole composed of the two shapes with the shank interposed therebetween is then pressed within a mold in order to be modeled with a desired curvature. Finally, the curved insole is heated in order to dry the glue that holds the two shapes together and thus maintain the curvature received in the mold.

Since the shank interposed between the two shapes of the insole is made of hardened steel in order to be non-deformable, it is necessary that such shank already be curved and hardened before being interposed between the two shapes.

Conventionally, the method for producing a shank provides for arranging a steel plate between the matrices of a suitable mold; such plate is then pressed by the two matrices in order to obtain the desired form and curvature.

Once the shank is molded, this is hardened in order to increase the mechanical strength thereof and it becomes practically non-deformable.

In particular, during the hardening, the shank is heated up to becoming incandescent and then it is quickly cooled, e.g. by being immersed in cold water.

The curved and hardened shank is then fixed to the two shapes, which are easily adapted to its form since it is made of flexible material, such as cardboard or leather.

The method for producing a shank to be inserted in a shoe insole of the type briefly described up to now has in practice shown that it does not lack drawbacks.

A main drawback lies in the fact that the insole, and the shank at its interior, must have exactly the same curvature as the form to which the insole must be fixed during the production of the shoe.

Indeed, also the upper, the heel and the sole must then be fixed to the insole, and all of these must be perfectly mating with each other so as to avoid the formation of folds and creases which would negatively affect the quality of the finished shoe, which could be uncomfortable to wear and not aesthetically appealing.

It is then necessary to mold and harden the shank to be inserted within the insole with a curvature perfectly equal to the curvature of the waist of the form.

Analogously, also the insole must be molded with the same curvature as the form and consequently with the same curvature as the shank, otherwise the latter could project from the insole, creating protuberances that would be uncomfortable for the user who wears the shoe.

Since each shoe model corresponds with a different form, based on the designer indications, for each shoe model it is necessary to create suitable molds for the shank and suitable molds for the insole, which precisely follow the form of the model in question.

However, such molds - since they must withstand molding heat and pressure - must be made of a very strong metal, and they require rather high costs.

In addition, for each shoe model, it is necessary to produce multiple molds for the insoles and multiple molds for the shanks in order to produce insoles and shanks of different sizes, corresponding to the various sizes of the shoes.

In particular, at least four molds are required for the shanks and eight molds for the insoles (four molds for the right insoles and four molds for the left insoles). This entails a further increase of the production costs, which might not be amortizable, especially if the particular shoe model is reproduced in a limited number of pieces.

In order to remedy such cost problems, one avoids constructing molds suitable for each shoe model, and one selects - both for the insole and for the shank - from among a series of molds previously available to the manufacturer, the mold which best approximates the desired curvature.

In this manner, however, one obtains an insole which is not perfectly equivalent to the form, and hence an insole that does not perfectly mate with the other elements of the shoe, in particular with the heel and the upper.

Consequently, one obtains an imperfect shoe which can have little aesthetic appeal and can be potentially uncomfortable to wear.

Known from document WO 90/01277 is a mold provided with two matrices, each composed of a support body provided with a space in which a removable base support is arranged, against which a succession of side-by-side vertical plates are abutted. The surface of the base support, against which the vertical plates are abutted, is shaped as a function of the form of the shank to be made, such that the vertical plates abutted thereon define, with the external edge thereof, an operating surface having the same shape and intended to mold the shank. Such mold of known type allows varying the curvature to be impressed on the shank by simply changing the base support against which the plates are abutted.

One drawback of the mold described in the document WO 90/01277 consists of the fact that, following the molding, the metallic shank requires a further hardening step, which increases the production costs and manufacturing times of the same.

The document US 2317475 describes a mold for molding a shank formed of a plurality of material layers of wood fiber and paper glued together. The mold is provided with two matrices provided with housing means adapted to melt the glue between the various layers of the shank in order to fix them together.

One drawback of the mold in the document US 2317475 consists in that it is not able to make shanks provided with high mechanical strength.

### Presentation of the invention

In this situation, the problem underlying the present invention is therefore that of overcoming the drawbacks manifested by the molds for shanks and by the methods for producing shanks of known type, by providing a mold for molding a shank and a method for molding a shank by means of the aforesaid mold, which allow obtaining a shank for insoles, and consequently a shoe insole, that are perfectly equivalent to the form.

A further object of the present invention is to provide a mold for molding a shank which is inexpensive to make and hence which can be custom-made for each shoe model.

A further object of the present invention is to provide a mold for molding a shank which is simple to attain.

A further object of the present invention is to provide a method for producing a shank which is simple to implement.

### Brief description of the drawings

The technical characteristics of the invention, according to the aforesaid objects, can be clearly seen from the contents of the below-reported claims and the advantages thereof will be more evident in the following detailed description, made with reference to the enclosed drawings, which represent a merely exemplifying and non-limiting embodiment of the invention in which:
- Fig. 1 shows an overall view of the mold for molding a shank for the insole of a shoe, object of the present invention, in particular with the two matrices of the mold in closed position;
- Fig. 2 shows a perspective view of a first matrix of the mold of figure 1;
- Fig. 3 shows a perspective view of a second matrix of the mold of figure 1;
- Figs. 4 and 5 respectively show a plate constituting the first matrix of figure 2 and the second matrix of figure 3 of the mold, object of the present invention;
- Figure 6 shows the plates of figures 4 and 5 coupled together;
- Fig. 7 shows a view of a shank for shoe insoles produced with the mold of figure 1;
- Fig. 8 shows a side view of the form to which the insole must be fixed during the production of the shoe;

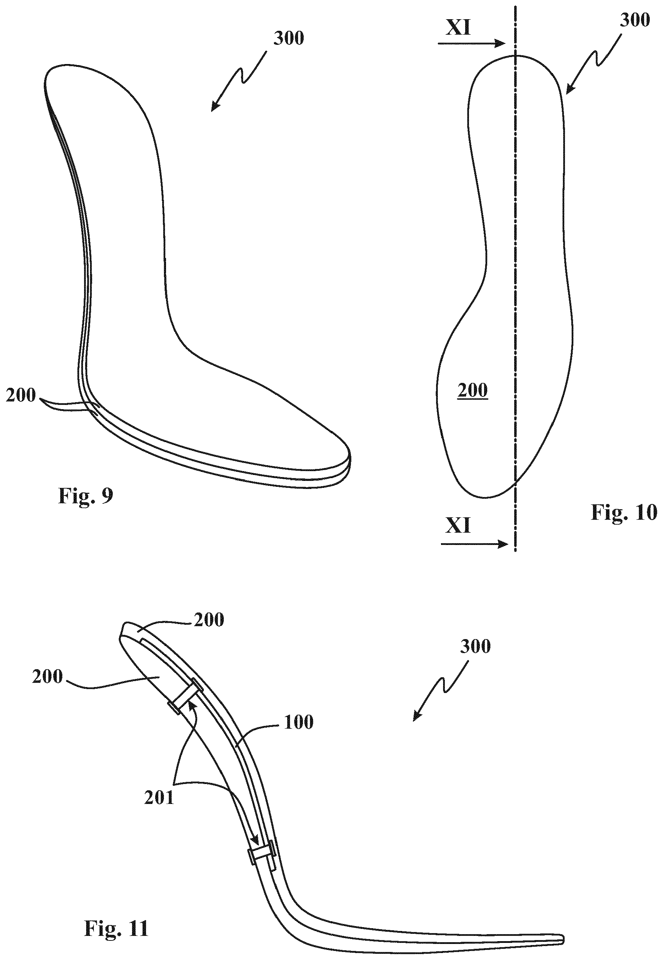

- Figs. 9 and 10 respectively show a perspective view and a front view of a shoe insole;
- Fig. 11 shows a sectional view of the shoe insole of figure 10 made along the trace XI-XI of figure 10, in order to better appreciate the shank at its interior.

### Detailed description of a preferred embodiment

With reference to the enclosed drawings, reference number 1 overall indicates a mold for molding a shank, according to the present invention.

The mold 1, object of the present invention, is intended to be employed for molding a shank 100, susceptible of being within an insole 300 for shoes so as to reinforce the insole 300 itself and sustain the weight of a user who wears the shoe.

The mold 1, object of the present invention, comprises a first matrix 2 and a second matrix 4 placed in front of each other, each of which provided with at least one operating surface opposite the corresponding operating surface of the opposite matrix. More in detail, the first matrix 2 is provided with a first operating surface 14' intended to receive, at least at the female seat 3, the shank 100 to be formed, and the second matrix 4 is provided with a second operating surface 14".

Advantageously, the first and the second operating surfaces 14', 14" are at least partially curved with a curvature to be conferred to the shank 100 to be formed and preferably such curvature follows the curvature of the lower surface of the shoe with which the insole 300 is intended to be associated, such insole 300 containing the shank 100, molded with the mold 1, object of the present invention.

In particular, the first and the second operating surfaces 14', 14", respectively, of the first and second matrix 2, 4 are preferably curved with a curvature that at least follows the curvature of the waist of the shoe to be formed, in order to mold a shank 100 curved with the exact curvature of the shoe with which it must be associated.

With the term "waist", in this patent, it is intended the lower portion of a shoe, placed between the toe and the heel and at the arch of the foot, which is raised from the ground and is generally curved with a curvature that varies depending on the model of the shoe and on the height of the heel.

According to the invention, the first and the second matrices 2, 4 are movable, by actuator means of a press, away from and closer to the other matrix in order to mold the shank 100 interposed therebetween.

Advantageously, the two matrices are intended to be positioned one on top of the other, with the matrix placed above vertically movable in order to be moved closer to or away from the matrix placed below.

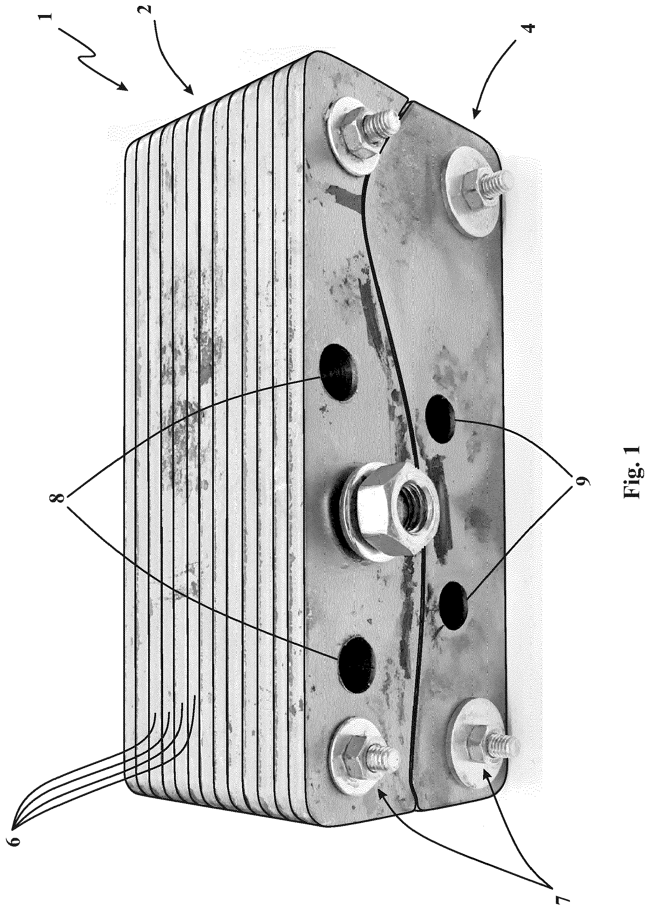

In a preferred embodiment, indicated in figure 1, the first matrix 2 is placed above the second matrix 4, and also the opposite embodiment is possible in which the second matrix 4 is placed above the first matrix 2.

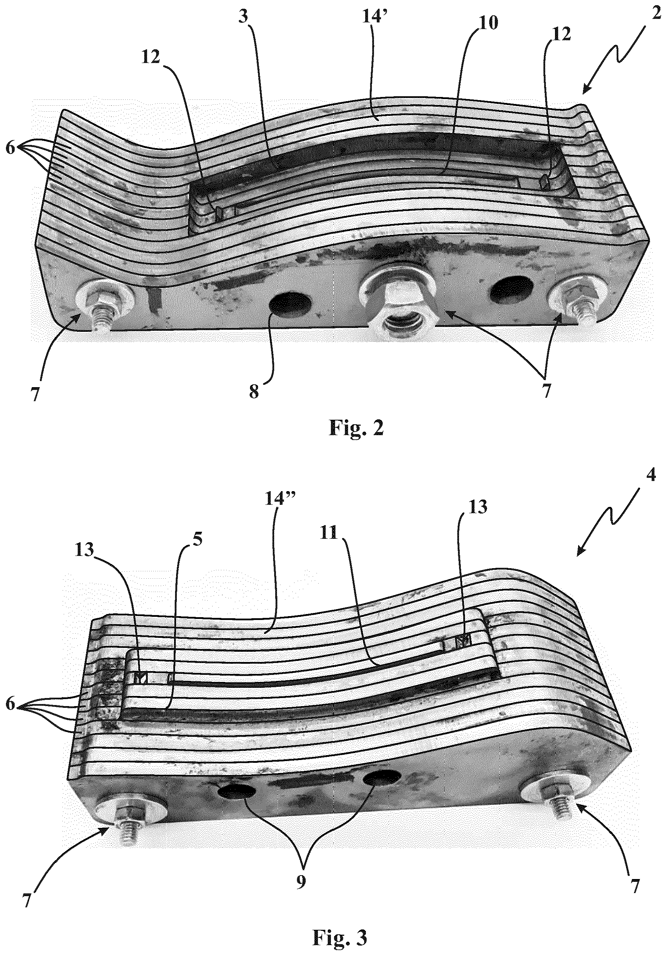

As illustrated in the enclosed figures 2 and 3, the first matrix 2 of the mold 1, object of the present invention, is provided with at least one female seat 3, receding with respect to the first operating surface 14' and intended to receive a shank 100 to be formed.

In addition, the second matrix 4 is provided with at least one male body 5, projecting from the second operating surface 14" and counter-shaped with respect to the female seat 3, and such male body 5 is intended to be inserted in the female seat 3 with the shank 100 to be formed interposed therebetween.

According to the invention, the first matrix 2 and the second matrix 4 are each composed of a plurality of side-by-side plates 6 that are parallel to each other and mechanically joined by first fixing means 7.

Advantageously, in accordance with the preferred embodiment illustrated in the enclosed figures 1-3, the first and the second matrices have a longitudinal extension equal to the longitudinal extension of each plate 6 that constitute them, and they have a transverse extension equal to the sum of the transverse extensions of multiple plates 6 that are side-by-side each other.

In particular, the plates 6 are provided with a transverse extension of about 2-10 millimeters, and preferably of about 5 millimeters.

In addition, the first and the second matrices 2, 4 are composed of a variable number of plates, in particular 5 to 20 plates, and preferably 10 to 15 plates, in order to form the first and the second matrices 2, 4 with a transverse extension of about 40-100 millimeters.

It is nevertheless possible to join together many more plates 6 in order to form matrices with greater transverse extension, in which the first matrix 2 is provided with multiple female seats 3, arranged side-by-side along its transverse extension, and the second matrix 4 is provided with multiple male bodies 5, arranged side-by-side along its transverse extension, in order to simultaneously mold multiple shanks 100.

It is also possible that the first matrix 2 is provided with multiple female seats 3, arranged along its longitudinal extension, and correspondingly that the second matrix 4 is provided with multiple male bodies 5, arranged along its longitudinal extension, in order to simultaneously mold multiple shanks 100.

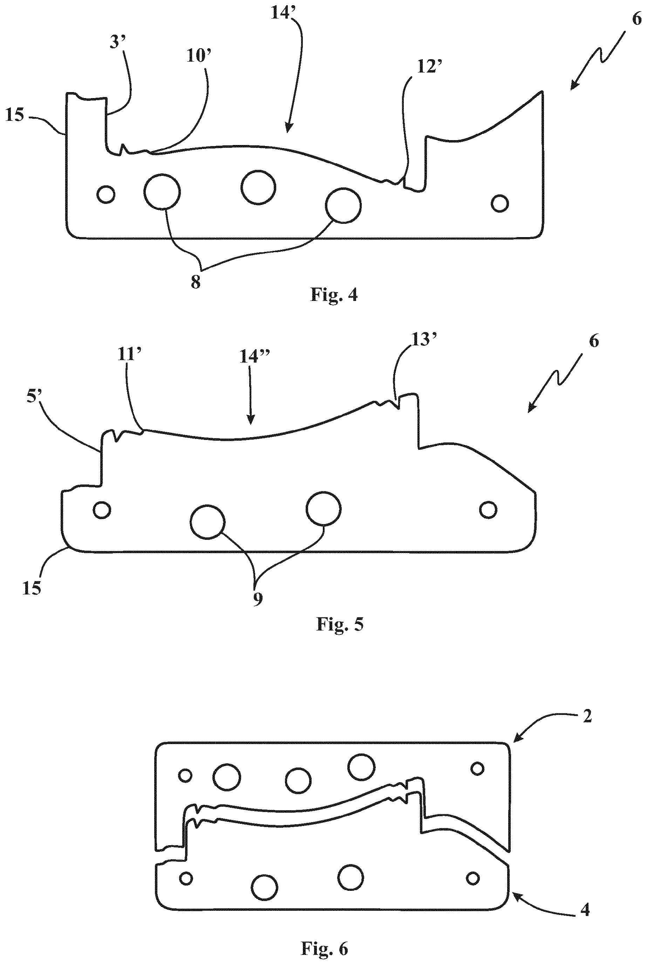

In accordance with the embodiment illustrated in figures 4 and 5, each plate 6 that respectively constitutes the first and the second matrix 2, 4 is provided with a shaped perimeter edge 15, which is preferably with a curvature corresponding to the curvature of the first and of the second operating surfaces 14', 14".

Advantageously, at least one part of the plates 6 which constitute the first matrix 2 is provided, along its perimeter edge 15, with a first recess 3', which, side-by-side the first recesses 3' of other corresponding plates 6, is intended to constitute the female seat 3 of the first matrix 2.

Analogously, at least one part of the plates 6 which constitute the second matrix 4 is advantageously provided, along its perimeter edge 15, with a first projection 5', which, side-by-side the first projections 5' of other corresponding plates 6, is intended to constitute the male body 5 of the second matrix 4.

Advantageously, the shaped perimeter edge 15 of each plate 6, which respectively constitutes the first and the second matrix 2, 4, is provided, at least respectively at the female seat 3 and at the male body 5, with at least one curvature which defines the form of the shank 100 to be made.

Advantageously, the plates 6 that respectively constitute the first and the second matrix 2, 4 are made of thermally conductive material, preferably of metallic material and in particular they are made starting from metallic plates which are cut along the perimeter edge 15.

Preferably, such plates 6 are cut by a numerical control machine (e.g. with the laser cutting or plasma cutting technique) starting from a computerized model; in this manner it is possible to make matrices provided with a first and a second operating surface 14', 14" with the desired shape.

In addition, in this manner it is advantageously possible to make matrices of molds with a rather limited cost, since the starting material (i.e. the metallic plate) has little cost, and the numerical control machine for carrying out the cutting can be amortized in multiple shoe lines.

In accordance with the embodiment illustrated in figures 2 and 3, the female seat 3 of the first matrix 2 advantageously comprises a groove 10, made on the bottom thereof, and the male body 5 of the second matrix 4 comprises a projecting rib 11, counter-shaped with respect to the groove 10, in order to mold a reinforcement rib 101 on the shank 100.

In particular, as illustrated in the enclosed figures 4 and 5, at least one of the plates 6 provided with the first recess 3' is advantageously provided, along its perimeter edge 15, with a second recess 10' in order to define groove 10 of the first matrix 2. Analogously, at least one of the plates 6 provided with the projection 5' is advantageously provided, along its perimeter edge 15, with a second projection 11' in order to define the projecting rib 11 of the second matrix 4.

In accordance with the embodiment illustrated in figures 2 and 3, the female seat 3 of the first matrix 2 or the male body 5 of the second matrix 4 also comprises at least one tooth 12 and, correspondingly, the male body 5 of the second matrix 4 or the female seat 3 of the first matrix 2 comprises at least one notch 13 in a position opposite the tooth 12 in order to mold at least one through hole 102 in the shank 100.

In accordance with the preferred embodiment illustrated in figures 2-7, the female seat 3 of the first matrix 2 comprises two teeth 12 and the male body 5 of the second matrix 4 comprises two corresponding notches 13 in a position opposite the two teeth 12 in order to mold two through holes 102 in the shank 100.

Advantageously, as illustrated more in detail hereinbelow, the through holes 102 of the shank 100 are susceptible of housing second means 201 for fixing the shank 100 to the insole 300.

In particular, as illustrated in the enclosed figures 4 and 5, at least one of the plates 6 provided with the first recess 3' is advantageously provided, along its perimeter edge 15, with at least one third projection 12' for defining the corresponding tooth 12 of the first matrix 2.

Analogously, at least one of the plates 6 provided with the first projection 5' is advantageously provided, along its perimeter edge 15, with a third recess 13' for defining the notch 13 of the second matrix 4.

In accordance with the preferred embodiment, illustrated in the enclosed figures, the first fixing means 7 of the mold 1 are extended transverse to the plates 6 from opposite faces of the corresponding first and second matrices 2, 4.

In particular, such fixing means 7 are preferably constituted by tie rods inserted in through holes made in each matrix 2, 4 and blocked at the ends by threaded nuts engaged with corresponding threads made at the ends of the tie rods themselves.

More in detail, each tie rod of the fixing means 7 is advantageously housed in a through hole made transversely on the corresponding matrix 2, 4 by means of a plurality of aligned through holes made in each of the plates 6 which constitute the matrix itself. Advantageously, moreover, each matrix is provided with multiple fixing means 7.

The mold 1 also comprises housing means (not illustrated in the enclosed figures) operatively associated with the first and the second matrices 2, 4 and in particular arranged for heating such matrices 2, 4 so as to heat the shank 100 to be formed interposed therebetween.

According to the idea underlying the present invention, the present mold 1 also comprises at least one first cavity 8 made in the first matrix 2 and at least one second cavity 9 made in the second matrix 4 in order to house the aforesaid means for housing the mold 1.

In particular, the means for heating the mold 1 are preferably constituted by electrical heating elements (not illustrated in the enclosed figures) which heat by Joule effect the metallic material of the mold 1, which in turn heats the shank 100 to be formed via thermal conduction.

Advantageously, the first and second cavities 8, 9 are extended transverse to the plates 6 and are obtained with a plurality of aligned through holes made in the plates 6 which constitute the corresponding first and second matrices 2, 4.

Also forming the object of the present invention is a method for molding a shank for shoe insoles by means of a mold of the above-described type and regarding which, hereinbelow, for description simplicity, the same reference nomenclature will be used. The method for molding a shank, object of the present invention, comprises a step of arranging at least one flexible sheet-like element between the first matrix 2 and the second matrix 4 of the mold 1 and, subsequently, a step of pressing the sheet-like element between the first and the second matrices 2, 4 in order to mold a shank 100 starting from the sheet-like element.

Advantageously, such sheet-like element is provided with a thickness of at least one order of magnitude smaller than its planar extension.

For example, the sheet-like element can have a planar extension provided with a longitudinal extension on the order of 5-15 centimeters, and preferably of about 10 cm, and a transverse extension on the order of 1-5 centimeters and preferably of about 2.5 centimeters. In addition, the sheet-like element can have a thickness on the order of 0.1-1 centimeters and preferably of about 0.3 centimeters.

According to the idea underlying the present invention, the flexible sheet-like element interposed between the first and the second matrices 2, 4 of the mold 1 is made of a composite material of fibers embedded in a plastic matrix, in particular carbon fibers in a thermosetting plastic.

In particular, the flexible sheet-like element is initially pliant and easily adapted to take on the desired form, i.e. the shape of the female seat 3 of the first matrix 2.

In addition, according to the idea underlying the present invention, the method for molding the present shank 100 comprises a step of heating the shank 100 interposed between the first and the second matrices 2, 4, in which the shank 100 rigidly takes on the shape of the mold 1.

In operation, through the heating of the mold 1 and the pressure of the first matrix 2 against the second matrix 4, the forming of the shank 100 takes place, and the latter becomes extremely rigid.

During the heating step, in fact, the thermosetting resin first becomes extremely liquid (at a temperature of about 70-120° C), so as to exactly follow the form of the mold 1 defined by the female seat 3 of the first matrix 2 and by the male body 5 of the second matrix 4.

After this, with the increase of the temperature, and in particular by heating the shank 100 at a temperature of at least 100° C, and preferably lower than 180° C, the thermosetting resin cross-links, bringing the shank 100 to have an extremely high hardness, so as to rigidly take on the shape of the mold 1.

Advantageously, the aforesaid heating step is obtained via conduction of the housing means inserted within the first and second cavities 8, 9 respectively of the first and second matrix 2, 4.

In operation, during the steps of molding and heating, the sheet-like element is advantageously deformed by the groove 10 and by the rib 11 respectively of the first and of the second matrix 2, 4 of the mold 1, which mold the rib 102 of the shank 100. In particular the rib 102 of the shank 100 will project from a first surface of the shank 100 and it will be placed in a second surface of the shank 100 itself, in particular opposite the first surface.

In addition, in the molding step, the sheet-like element is advantageously perforated by each tooth 12 which is inserted in its corresponding notch 13, in order to create at least one through hole 102 in the shank 100.

In addition, the sheet-like element from which the shank 100 is obtained is advantageously curved, taking on a curvature equal to the curvature of the first and of the second operating surfaces 14', 14" of the first and of the second matrices 2, 4.

In particular, the shank 100 molded with such method advantageously takes on the exact desired curvature, being obtained from a mold 1 cut by numerical control machines starting from a computerized model of the desired shape.

In this manner, the shank 100 will perfectly adapt to the waist of the shoe to be produced.

Advantageously, the shank 100 is then left to cool within the mold 1, and preferably it is left to slowly cool in order to prevent the formation of cracks therein which compromise the mechanical strength thereof.

Once the shank 100 is cooled, a step is advantageously provided for finishing the latter, for example by means of brushing or milling aimed to remove the resin flashes which can be formed during the molding step, in which the excess resin is thrust towards the perimeter edges of the shank 100.

Advantageously, the method for molding a shank, object of the present invention, is inserted within a method for producing an insole 300 for shoes.

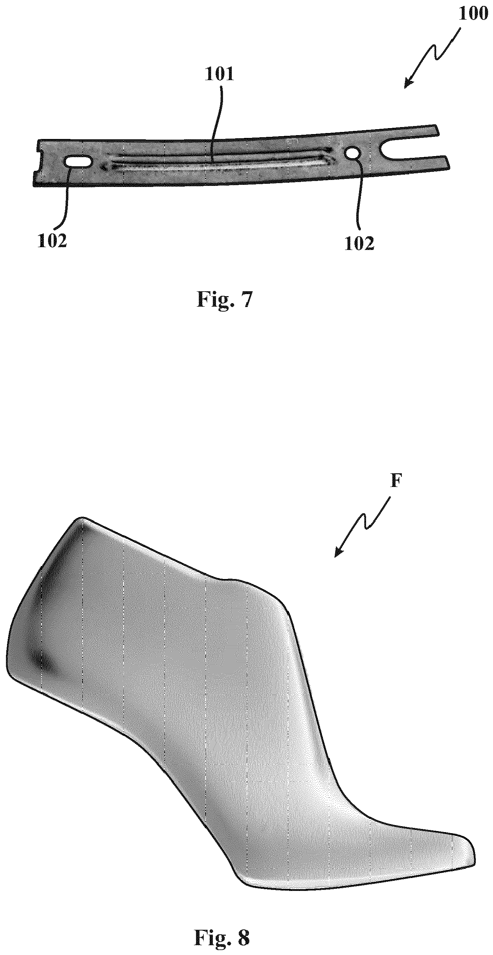

Such method for producing an insole 300 comprises step for molding a form F (of the type indicated in figure 8), preferably made of plastic, starting from a computerized three-dimensional model.

Such form F will advantageously act as a model during the entire production of the shoe.

The method for creating the insole 300 also comprises a step of arranging a plurality of sheet-like shapes 200, substantially shaped as a sole of a food.

In operation, the shapes 200 are cut starting from sheets of cardboard or leather by following the edges of the form F.

Subsequently, a step is advantageously provided for fixing together at least two shapes 200 with at least one shank 100 interposed therebetween for constituting an insole 300. In particular, the shank 100 is advantageously fixed to a first shape 200 by means of second fixing means 201 inserted within the through holes 102 of the shank 100 itself. For example by means of screws or rivets.

Subsequently, the first shape 200 and the shank 100 fixed thereto are covered with a glue layer in order to fix a second shape 200 which covers the shank 100, which is no longer visible from outside of the insole 300.

Advantageously, the method for creating the insole 300 also comprises a step of forming, by means of pressure and heat, the insole 300 itself, composed of at least two shapes 200 with at least one shank 100 interpose.

In such forming step, the insole 300 will be advantageously impressed with a desired three-dimensional shape, and in particular, the curvature of the sole of the form F.

Advantageously, the insole 300 obtained with the shank 100 molded with the mold 1, object of the present invention, is more easily adaptable to the form F, even if the insole 300 is molded by means of molds not exactly following the form F itself, since it is sustained by a shank 100 with exactly the desired form.

The mold 1 for molding a shank for shoe insoles and the method for molding a shank thus conceived therefore attain the pre-established objects.

## Claims

1. Mold (1) for molding a shank for shoe insoles, comprising:
- a first matrix (2) provided with at least one female seat (3) intended to receive a shank (100) to be formed;
- a second matrix (4) provided with at least one male body (5) counter-shaped with respect to said female seat (3) and intended to be inserted in the latter with said shank (100) to be formed interposed therebetween;
at least one of said first matrix (2) and said second matrix (4) being movable, by actuator means of a press, away from and closer towards the other matrix in order to mold said shank (100);
each said first matrix (2) and second matrix (4) being composed of a plurality of side-by-side plates (6) that are parallel to each other and mechanically joined by first fixing means (7);
said mold (1) being **characterized in that** it comprises at least one first cavity (8) made in said first matrix (2) and at least one second cavity (9) made in said second matrix (4) in order to house means for heating said mold (1).

2. Mold (1) for molding a shank according to claim 1, **characterized in that** said first and second cavities (8, 9) are extended transversely with respect to said plates (6) and they are obtained with a plurality of aligned through holes made in said plates (6).

3. Mold (1) for molding a shank according to claim 1 or 2, **characterized in that** said heating means comprise electrical heating elements.

4. Mold (1) for molding a shank according to any one of the preceding claims, **characterized in that** said first fixing means (7) are extended transversely with respect to said plates (6) from opposite faces of said first and second matrices (2, 4).

5. Mold (1) for molding a shank according to any one of the preceding claims, **characterized in that** the female seat (3) of said first matrix (2) comprises a groove (10) made on its bottom and that the male body (5) of said second matrix (4) comprises a projecting rib (11), counter-shaped with respect to said groove (10), in order to mold a reinforcement rib (101) on said shank (100).

6. Mold (1) for molding a shank according to any one of the preceding claims, **characterized in that** the female seat (3) of said first matrix (2) or the male body (5) of said second matrix (4) comprises at least one tooth (12) and correspondingly the male body (5) of said second matrix (4) or the female seat (3) of said first matrix (2) comprises at least one notch (13) in a position opposite said tooth (12) in order to mold at least one through hole (102) in said shank (100).

7. Mold (1) for molding a shank according to any one of the preceding claims, **characterized in that** said first and second matrix (2, 4) have:
- a longitudinal extension equal to the longitudinal extension of each said plate (6) of the corresponding said plurality of plates (6); and
- a transverse extension equal to the sum of the transverse extensions of the corresponding said plurality of plates (6) that are side-by-side each other.

8. Method for molding a shank for shoe insoles by means of a mold according to any one of the preceding claims, which comprises:
- a step of arranging at least one flexible sheet-like element between said first matrix (2) and said second matrix (4);
- a step of pressing said sheet-like element between said first and second matrix (2, 4) in order to mold a shank (100) from said sheet-like element;
said method being **characterized in that** said flexible sheet-like element is made of a composite material of fibers embedded in a plastic matrix, in particular carbon fibers in a thermosetting plastic, **and in that** it comprises a step of heating said shank (100) interposed between said first and second matrix (2, 4), in which said shank (100) rigidly takes on the shape of said mold.

9. Method for molding a shank according to claim 8, **characterized in that** said heating step is obtained via conduction of said heating means inserted within the first and the second cavity (8, 9) respectively of said first and second matrix (2, 4).

10. Method for molding a shank according to claim 8 or 9, **characterized in that**, in said heating step, said shank (100) is heated at a temperature of at least 100° C.
